# EUROPEAN PATENT SPECIFICATION

(11) **EP 0 794 380 B1**
(45) Date of publication and mention of the grant of the patent: **05.06.2002**
(21) Application number: 97660021.3
(22) Date of filing: 04.03.1997
(51) Int. Cl.: F16N 7/40, F16N 39/00

(54) **Dewatering device for an oil circulating lubrication system**
Entwässerungselement für ein Schmierölführungssystem
Dispositif d'élimination d'eau pour un système de lubrification à huile

(30) Priority: 08.03.1996 FI 961114
(43) Date of publication of application: 10.09.1997
(73) Proprietor: Oy Hydrox-Pipeline Ltd., 54100 Joutseno (FI)
(72) Inventor: Kumpulainen, Olavi, 54100 Joutseno (FI)
(74) Representative: Helino, Timo Kalervo

(56) References cited:
- WO-A-94/08174
- WO-A-96/40841
- US-A- 2 660 309

## Description

The present invention relates to a dehydrating device belonging to an oil circulating lubrication system as defined in the preamble of claim 1.

The dehydrating device of the invention has been specifically developed for the oil circulating lubrication system of a paper machine, but it can also be used in other areas of process technology and in large mechanical assemblies employing oil circulating lubrication systems.

Especially in the oil circulating lubrication systems of plants that use hot steam, a problem is, besides the impurities and air getting into the oil, the water that accumulates in it. The water significantly reduces the lubricating effect of the oil and therefore leads to relatively frequent oil changes. As the oil volumes in circulating lubrication systems may be dozens of cubic metres, the cost of an oil change may amount to as much as a million FIM.

A prior-art attempt to solve the hydration problem involves the use of large oil containers in which the water, being heavier than oil, will sink to the bottom of the container and can then be removed. However, in large containers the oil tends to form stationary oil layers at the top and bottom parts of the container, so that the incoming oil together with any impurities contained in it will flow almost unchanged between these layers through the container and back into circulation.

The dehydrating device of the invention is based on the observation that water, as it circulates together with oil in the return pipe system and in the oil container, is dissolved with oil to such a degree that separating it by gravity in the oil container becomes largely impossible. Thus the inventive idea is based on placing the dehydrating device near the point where the water has been introduced into the oil, where the water in the oil flow is still in the form of distinct drops that have not yet been dissolved in the oil.

A corresponding idea has, however, already been utilized in a solution presented in international patent application WO 94/08174. However, this solution does not work satisfactorily. In the dehydrating device proposed in said specification, the oil flows in a relatively unchanged form through the upper part of a separation chamber, and only part of the impurities to be removed is caught in the separator.

The object of the present invention is to eliminate the drawbacks mentioned above. A specific object of the invention is to produce a new type of dehydrating device that allows the water to be removed from the oil in an oil circulating lubrication system in a manner as effective and simple as possible.

The dehydrating unit of the dehydrating device of the invention is located in the return piping associated with the object to be lubricated by the oil circulating lubrication system, preferably immediately after the object to be lubricated. The dehydrating unit comprises a separation chamber of a vertically elongated shape. The upper part of the separation chamber is of a large cross-section and comprises a separator part, while the lower part of the separation chamber is of a small cross-section and forms a receiver part which gathers the water separated. The dehydrating unit also comprises a return pipe exit duct, a return pipe entrance duct opening downward into the separation chamber at a level below the lower edge of the exit duct, a replacement air duct in the space associated with the exit duct in the upper part of the separating chamber, and an outlet valve at the lower end of the receiver part for letting out the water gathered in it.

Thus, a clear break is created in the oil flow passing through the structure of the invention by dividing it into a downward entrance flow and an upward exit flow. In the wide and turbulent separator part, the heavier flow components, the water drops, are allowed to flow downward, and after reaching the narrow receiver part they cannot get back into the oil flow.

In addition, as the dehydrating device forms an effective air trap, it needs to have a replacement air source on the exit side to prevent the occurrence of pressure differences across the device. The device thus works evenly all the time and no impurities can pass through it with the flow.

The receiver part may be made of a transparent material such as glass or e.g. clear plastic tube. The device is preferably provided with a safety valve placed between the separator part and the receiver part to allow the receiver part to be closed and separated from the rest of the dehydrating unit when necessary.

The volume of the separator part is preferably substantially larger than the volume of the receiver part and thus the separator part preferably tapers conically downwards into a narrower and smaller receiver part, so that oil flowing freely with a quiet turbulence will only circulate in the separator part without affecting the receiver part, into which the separated water can flow, being heavier than oil.

The entrance duct opens downward in the separator part at a level below the lower edge of the exit duct so that in all circumstances the port of the entrance duct is completely immersed in oil, which means that the dehydrating unit also acts as an air trap. Therefore, the upper part of the separator part is provided with a replacement air duct with e.g. a ball valve and a suitable air filter in it.

If it is to be expected that plenty of water will be accumulated and recovered from the receiver part, it is possible to provide the receiver part with a suitable larger receiver or other expansion, which is preferably placed in the lower part of the receiver part so that the receiver part first tapers into a clearly narrower shape than the separator part and only further down expands into a receiver. Thus, the relatively narrow structure of the receiver part ensures that the separated water will remain in the receiver part, preventing it from flowing back into the oil.

Preferably a dehydrating unit as provided by the invention is connected to the return pipe of each object of lubrication and preferably as close as possible to the object, so that the water cannot be dissolved in the oil before separation. In some applications with a fast oil flow and a relatively short piping, it is also possible to have fewer dehydrating units; even just one unit placed in the return side main piping before the oil tank may be sufficient. 'Object of lubrication' refers e.g. to a single drying assembly in a paper machine, but other classification principles can also be applied as necessary.

As compared with prior art, the dehydrating device of the invention has the advantage that a very simple structure can be used to effectively recover water from lubricating oil and the water is not mixed in a clean oil tank but can be removed before it. Furthermore, the invention makes it possible in a large oil circulating lubrication system to monitor the system to see exactly in which part of the process water is introduced into the oil, and in this way to obtain information about other aspects regarding the process or the equipment used.

In the following, the invention is described in detail by referring to the attached drawing, in which
Fig. 1 presents a diagram representing an oil circulating lubrication system, and
Fig. 2 presents a dehydrating device as provided by the invention, placed in an oil circulating lubrication system.

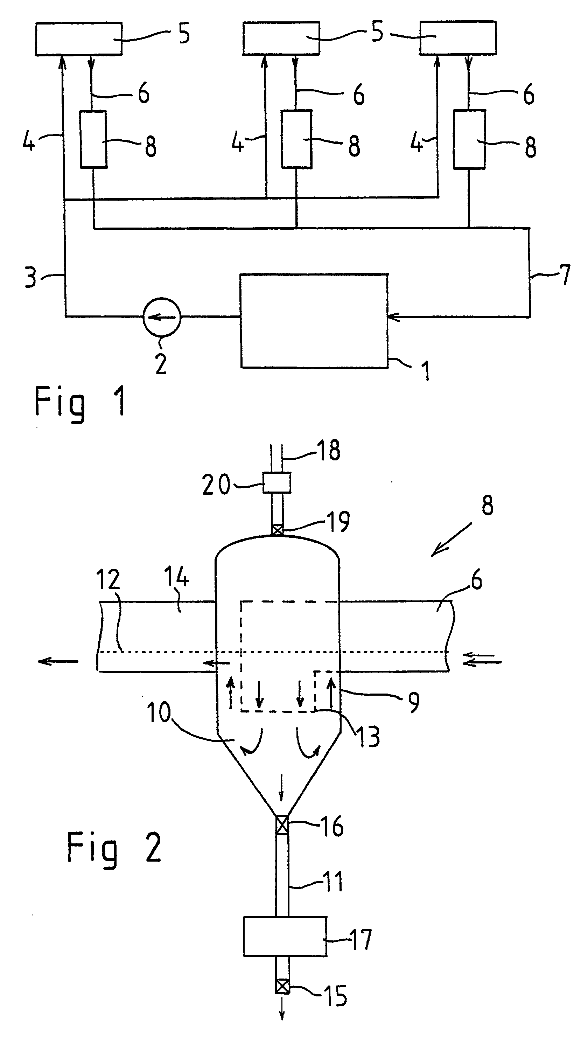

Fig. 1 illustrates the principle of the oil circulating lubrication system of a paper machine, which comprises an oil tank 1, a lubrication oil pump 2 connected to the pressure side main piping 3, and a system of distribution pipes 4 branching out from the main piping to the objects of lubrication 5. From the objects of lubrication 5, return pipes 6 are connected to the return side main piping 7, through which the oil flows back into the oil tank 1. Placed in each one of the return pipes 6 at a point close to the object of lubrication 5 is a dehydrating unit 8.

As shown in Fig. 2, the dehydrating unit 8 consists of a vertical elongated container of a circular cross-section, a separation chamber 9 which has an upper part of a larger cross-section acting as a separator part 10 and tapering conically downward into a receiver part 11 in the lower part of the container.

The entrance duct 13 for the return pipe 6 opens downward in the separator part 10 below the level of the oil surface 12 and the lower edge of the exit duct 14. Thus, there is a downward vertical oil flow in the entrance duct, whereas around it there is an upward vertical flow towards the exit duct. These vertical flows separated from each other form a flow damping area, which also constitutes an air trap in the flow, below which the cylindrical and conical separator part contains a turbulent flow in which the actual water separating action occurs.

Between the separator part 10 and the receiver part 11 there is a safety valve 16 and in the lower part of the receiver part 11 a receiver 17, from which the water gathered in it can be removed via an outlet valve 15.

Provided in the upper part of the separation chamber 9 is a replacement air duct with an air filter 20 and a valve 19, through which replacement air can flow when required into that part of the oil circulating lubrication system which lies between the dehydrating unit 8 and the oil tank 1.

The dehydrating device presented in Fig. 2 works as follows. As oil gravitates down through the return pipe 6 via the entrance duct 13 into the separator part 10, the oil flow is smoothed and, due to the difference between the specific weight of oil and that of the water drops in it, the water drops flow downward into the receiver part 11 while the pure oil flows upward via the exit duct 14 and out of the dehydrating unit. As the tubular receiver part 11 has a relatively small cross-section, the oil flow in the separator part 10 cannot affect the water in the receiver part 11, but substantially all water in the form of drops in the oil is gathered and remains in the receiver part. At suitable intervals of time, i.e. depending on the size of the receiver part 11 and the receiver 17 possibly used in it and on the water content of the oil to be purified, the water can be removed manually by opening the valve 15. It is also possible to provide the device, in a manner known in itself, with various sensing systems for automatic removal of water from the receiver part when necessary or at regular intervals.

## Claims

1. Dehydrating device for an oil circulating lubrication system comprising an oil tank (1), a lubricating oil pump (2), pressure-side pipes (3), distribution pipes (4) to the objects of lubrication (5), return pipes (6) from the objects of lubrication (5) and a main piping system (7),
and the return piping (6,7) from the object of lubriction (5) is provided with a dehydrating unit, which comprises
a separation chamber (9) of a vertically elongated shape, whose upper part comprises a separator part (10) and whose lower part is of a narrower cross-section than that of the upper part and forms a receiver part (11),
an exit duct (14) for the return piping, starting from the upper part of the separation chamber,
an entrance duct (13) for the return piping (6,7), and
an outlet valve (15) at the lower end of the receiver part
**characterized in that**
the entrance duct (13) opens downward into the separation chamber at a level below the lower edge of the exit duct (14), and
the space associated with the exit duct in the upper part of the separating chamber is provided with a replacement air duct (18).

2. Dehydrating device as defined in claim 1, **characterized in that** it has a safety valve (16) between the separator part (10) and the receiver part (11).

3. Dehydrating device as defined in claim 1, **characterized in that** the receiver part (11) is made of a transparent material.

4. Dehydrating device as defined in claim 1, **characterized in that** the volume of the separator part (19) is substantially larger than the volume of the receiver part (11).

5. Dehydrating device as defined in claim 1, **characterized in that** the separator part (10) tapers conically downward into the receiver part (11).

6. Dehydrating device as defined in claim 1, **characterized in that** the lower end of the receiver part (11) is provided with a receiver (17).

7. Dehydrating device as defined in claim 1, **characterized in that** the replacement air duct (18) is provided with a valve (19) and an air filter (20).

8. Dehydrating device as defined in any one of claims 1 - 7, **characterized in that** the return pipe from each object of lubrication (5) is provided with a dehydrating unit (8).

9. Dehydrating device as defined in any one of claims 1 - 8, **characterized in that** the dehydrating unit (8) is connected to the return pipe (6) at a point immediately after the object of lubrication.

## Patentansprüche

1. Dehydrierungsvorrichtung für ein Ölumlaufschmiersystem, das einen Öltank (1), eine Schmierölpumpe (2), druckseitige Rohre (3), Verteilungsrohre (4) zu den zu schmierenden Objekten (5), Rückleitungsrohre (6) von den zu schmierenden Objekten (5) und ein Hauptrohrstrangsystem (7) umfaßt,
wobei der Rückleitungsrohrstrang (6, 7) von dem zu schmierenden Objekt (5) mit einer Dehydrierungseinheit versehen ist, die umfaßt:
eine Trennkammer (9) mit in vertikaler Richtung langgestreckter Form, deren oberer Abschnitt einen Trennabschnitt (10) umfaßt und deren unterer Abschnitt einen schmaleren Querschnitt als der obere Abschnitt besitzt und einen Aufnahmeabschnitt (11) bildet,
eine Austrittsleitung (14) für den Rückleitungsrohrstrang, die vom oberen Abschnitt der Trennkammer ausgeht,
eine Eintrittsleitung (13) für den Rückleitungsrohrstrang (6, 7) und
ein Auslaßventil (15) am unteren Ende des Aufnahmeabschnitts,
**dadurch gekennzeichnet, daß**
die Eintrittsleitung (13) in die Trennkammer auf einer Höhe unterhalb der Unterkante der Austrittsleitung (14) in Abwärtsrichtung einmündet und
der Raum, der der Austrittsleitung im oberen Abschnitt der Trennkammer zugeordnet ist, mit einer Luftaustauschleitung (18) versehen ist.

2. Dehydrierungsvorrichtung nach Anspruch 1, **dadurch gekennzeichnet, daß** sie zwischen dem Trennabschnitt (10) und dem Aufnahmeabschhitt (11) ein Sicherheitsventil (16) aufweist.

3. Dehydrierungsvorrichtung nach Anspruch 1, **dadurch gekennzeichnet, daß** der Aufnahmeabschnitt (11) aus einem lichtdurchlässigen Material hergestellt ist.

4. Dehydrierungsvorrichtung nach Anspruch 1, **dadurch gekennzeichnet, daß** das Volumen des Trennabschnitts (10) wesentlich größer als das Volumen des Aufnahmeabschnitts (11) ist.

5. Dehydrierungsvorrichtung nach Anspruch 1, **dadurch gekennzeichnet, daß** der Trennabschnitt (10) nach unten in den Aufnahmeabschnitt (11) konisch zuläuft.

6. Dehydrierungsvorrichtung nach Anspruch 1, **dadurch gekennzeichnet, daß** das untere Ende des Aufhahmeabschnitts (11) mit einem Aufnehmer (17) versehen ist.

7. Dehydrierungsvorrichtung nach Anspruch 1, **dadurch gekennzeichnet, daß** die Luftaustauschleitung (18) mit einem Ventil (19) und einem Luftfilter (20) versehen ist.

8. Dehydrierungsvorrichtung nach einem der Ansprüche 1-7, **dadurch gekennzeichnet, daß** das Rückleitungsrohr von jedem zu schmierenden Objekt (5) mit einer Dehydrierungseinheit (8) versehen ist.

9. Dehydrierungsvorrichtung nach einem der Ansprüche 1-8, **dadurch gekennzeichnet, daß** die Dehydrierungseinheit (8) mit dem Rückleitungsrohr (6) an einem Punkt direkt hinter dem zu schmierenden Objekt verbunden ist.

## Revendications

1. Un dispositif de séchage pour un système de lubrification par circulation d'huile comprenant un réservoir d'huile (1), une pompe (2) à huile de lubrification, des conduits (3) de côté pressurisé, des conduits (4) de distribution vers les objets à lubrifier (5), des conduits de retour (6) à partir des objets à lubrifier (5) et un système (7) de conduit principal,
et les conduits de retour (6, 7) à partir de l'objet à lubrifier (5) sont munis d'une unité de séchage, l'unité de séchage comprenant :
- une chambre (9) de séparation de forme allongée verticale, dont la partie supérieure comprend une partie de séparation (10) et dont la partie inférieure est d'une section transversale plus étroite que la section transversale de la partie supérieure, la partie inférieure formant une partie de réception (11);
- un passage (14) de sortie pour les conduits de retour, à partir de la partie supérieure de la chambre de séparation ;
- un passage (13) d'entrée pour les conduits de retour (6, 7); et
- une valve de sortie (15) à l'extrémité inférieure de la partie de réception,
**caractérisé en ce que** :
- le passage (13) d'entrée débouche vers le bas dans la chambre de séparation à un niveau inférieur au bord inférieur du passage de sortie (14) ; et
- l'espace associé avec le passage de sortie dans la partie supérieure de la chambre de séparation est muni d'un passage (18) de remplacement d'air.

2. Dispositif de séchage selon la revendication 1, **caractérisé en ce que** le dispositif a une valve de sécurité (16) entre la partie (10) de séparation et la partie (11) de réception.

3. Dispositif de séchage selon la revendication 1, **caractérisé en ce que** la partis (11) de réception est en matériau transparent.

4. Dispositif de séchage selon la revendication 1, **caractérisé en ce que** le volume de la partie (19) de séparation est sensiblement plus grand que le volume de la partie de réception (11).

5. Dispositif de séchage selon la revendication 1, **caractérisé en ce que** la partie (10) de séparation a une forme conique se rétrécissant vers le bas vers la partie (11) de réception.

6. Dispositif de séchage selon la revendication 1, **caractérisé en ce que** l'extrémité inférieure de la partie de réception (11) est munie d'un collecteur (17).

7. Dispositif de séchage selon la revendication 1, **caractérisé en ce que** le passage (18) de remplacement d'air est muni d'une valve (19) et d'un filtre à air (20).

8. Dispositif de séchage selon l'une quelconque des revendications 1 à 7, **caractérisé en ce que** le conduit de retour à partir de chaque objet à lubrifier (5) est muni d'une unité (8) de séchage.

9. Dispositif de séchage selon l'une quelconque des revendications 1 à 8, **caractérisé en ce que** l'unité de séchage (8) est reliée au conduit (6) de retour en un point situé immédiatement après l'objet à lubrifier.
